# EUROPEAN PATENT APPLICATION

(11) **EP 4 760 212 A1**
(43) Date of publication of application: **17.06.2026**
(21) Application number: 24874655.4
(22) Date of filing: 02.10.2024
(51) Int. Cl.: G01C 21/34, B60L 50/53, B60L 58/12, G08G 1/00, B60L 15/20

(54) **VEHICLE AND VEHICLE MANAGEMENT SYSTEM**

(30) Priority: 03.10.2023 JP 2023172183
(71) Applicant: Hitachi Construction Machinery Co., Ltd., Tokyo 110-0015 (JP)
(72) Inventor: KANAI, Masaki, Tokyo 100-8280 (JP); HAMADA, Tomoyuki, Tsuchiura-shi, Ibaraki 300-0013 (JP); SAITO, Shinjiro, Tsuchiura-shi, Ibaraki 300-0013 (JP)
(74) Representative: Manitz Finsterwald Patent- und Rechtsanwaltspartnerschaft mbB
(86) International application number: PCT/JP2024/035337
(87) International publication number: WO 2025/075055

(57) **Abstract**

A controller calculates, on the basis of map data and a loading amount of a vehicle, a return power amount that is a power amount required to travel from each point on a travelling route to a charging point that is a point provided with a power supply, before the vehicle starts to travel on the travelling route from the charging point to a predetermined destination, calculates a predicted power amount serving as a battery remaining amount of the power storage device at each point on the travelling route from a current position of the vehicle to the predetermined destination, while the vehicle is travelling along the travelling route toward the predetermined destination, and changes the destination of the vehicle from the predetermined destination to another destination when there is a point where the predicted power amount falls below the return power amount among points on the travelling route from the current position to the predetermined destination.

## Description

### Technical Field

The present invention relates to a vehicle management system, and particularly to a vehicle management technique at a work site where a vehicle equipped with a power storage device travels.

### Background Art

In an extra large dump truck that is operated in an open pit mine or the like and conveys ores and earth and sand mined by a loading machine, a system that generates electricity using a diesel engine mounted on the vehicle body to drive a motor for travelling of the vehicle is widely used. However, since the amount of energy required for conveyance work is very large, there is a problem that the amount of emission of a global warming gas is large. In order to solve this problem, the development of a battery dump in which the motor is driven not by conventional power generation using a diesel engine but by an on-board storage battery has been advanced.

In such a battery dump, a power amount required per conveyance cycle in which a series of operations of loading, conveyance, and dumping are performed is very large relative to the capacity of the storage battery, and thus charging is frequently required at each conveyance cycle, for example. As charging methods, a method of charging by stopping at a charging station installed in or near a conveyance path, and a method of charging by using a trolley overhead during travelling as depicted in Patent Document 1 have been known. Here, in order to carry out continuous conveyance work, it is necessary to prevent the running out of power in which a battery remaining amount is depleted. For this purpose, it is necessary to always secure a battery remaining amount enough to return to a charging facility, and it is required to make a travelling plan in advance in consideration of a power consumption amount on a travelling route and to travel according to the plan. Such a travelling plan includes a charging time at a charging station for charging a power amount required for the conveyance cycle and a travelling speed for similarly securing a charging time for charging through a trolley overhead. Lack of the charging times causes the running out of power, but if the charging times are too long, the time required for the conveyance cycle increases to decrease the productivity. Thus, it is desirable to set the charging times to secure a necessary and sufficient charging amount for the conveyance cycle.

However, due to external disturbances during the conveyance cycle, the battery remaining amount becomes lower than the value assumed in the travelling plan in some cases. The types of external disturbances include, first of all, re-spotting to adjust a loading position or the like, exceptional dumping work in the case of overloading in the loading work, unplanned work such as temporary stop and restart due to falling rocks or the like, and interaction with another vehicle such as another dump truck or bulldozer at an intersection or on a conveyance path. In addition, depending on the road surface condition, the power consumption amount may increase due to tire idling in mud and an increase in wheel torque on an irregular ground. Further, it is also conceivable that the power consumption amount increases due to a change in battery characteristics caused by severe temperature conditions in a mine and a change in load of auxiliary equipment such as a radiator fan. As described above, since there are many external disturbance factors that lead to an increase in the power consumption amount at the work site of the mine, a situation in which the battery remaining amount is insufficient can easily occur even if a travelling plan is made in consideration of the charging time as described above.

If the battery remaining amount becomes lower than that of the plan and the power runs out before reaching a charging facility, an exceptional collection of a battery dump or charging work occurs, and the productivity in the whole mine largely decreases. Therefore, in a case where the occurrence of the running out of power is foreseen, it is desirable to change the travelling plan and return to the charging point. In response to such a problem, examples depicted in Patent Document 2 and the like disclose a method of displaying information on charging facilities that can be reached with the current battery remaining amount in a case where the battery remaining amount is lowered in a vehicle driven by an on-board battery.

### Prior Art Document

### Patent Documents

Patent Document 1: US-2015-0283907-A
Patent Document 2: JP 7072597 B2

### Summary of Invention

### Problem to be Solved by Invention

If the method depicted in Patent Document 2 is applied, even where the battery remaining amount becomes lower than that of the plan due to external disturbances, it is judged whether the travelling plan to the charging point is executable, and it is possible to change the travelling plan so as to return to the charging point in order to prevent the power from running out in a case where the travelling plan is inexecutable. However, the vehicle returns to the charging point without performing loading or dumping work due to the change of the travelling plan in some cases, which disadvantageously leads to a decrease in the productivity of the whole mine.

The present invention has been made in view of the above problems, and an object thereof is to provide a vehicle and a vehicle management system that can prevent power from running out while suppressing a decrease in productivity in a case where the battery remaining amount of the vehicle becomes lower than that of a plan due to external disturbances.

### Means for Solving Problem

In order to achieve the above object, the present invention provides a vehicle including: a power receiving device that receives power from a power supply; a power storage device that stores the power received by the power receiving device; a position sensor that acquires a position; a loading sensor that acquires a loading amount; and a controller that acquires map data and sets a destination based on the map data, in which the controller is configured to calculate, on the basis of the map data and the loading amount, a return power amount that is a power amount required to travel from each point on a travelling route to a charging point that is a point provided with the power supply, before the vehicle starts to travel on the travelling route from the charging point to a predetermined destination, calculate a predicted power amount serving as a battery remaining amount of the power storage device at each point on the travelling route from a current position of the vehicle acquired by the position sensor to the predetermined destination, while the vehicle is travelling along the travelling route toward the predetermined destination, and change the destination of the vehicle from the predetermined destination to another destination when there is a point where the predicted power amount falls below the return power amount among points on the travelling route from the current position to the predetermined destination.

In addition, the present invention provides a vehicle management system including: a storage device that stores map data; and a management controller that sets a destination of a vehicle based on the map data, in which the management controller is configured to calculate, on the basis of the map data and a loading amount of the vehicle, a return power amount that is a power amount required to travel from each point on a travelling route to a charging point that is a point provided with a power supply, before the vehicle starts to travel on the travelling route from the charging point to a predetermined destination, calculate a predicted power amount serving as a battery remaining amount of a power storage device at each point on the travelling route from a current position of the vehicle to the predetermined destination, while the vehicle is travelling along the travelling route toward the predetermined destination, and change the destination of the vehicle from the predetermined destination to another destination when there is a point where the predicted power amount falls below the return power amount among points on the travelling route from the current position to the predetermined destination.

### Advantages of Invention

According to the present invention, even where the battery remaining amount of a vehicle is lowered due to an influence of external disturbances, continuous operation of the vehicle that prevents power from running out can be performed while suppressing a decrease in productivity.

### Brief Description of Drawings

[FIG. 1] FIG. 1 is a schematic diagram for depicting a configuration of a vehicle management system.
[FIG. 2] FIG. 2 is a block diagram for depicting a configuration of a vehicle management system in a first embodiment.
[FIG. 3A] FIG. 3A is a diagram for depicting a specific example of vehicle allocation information.
[FIG. 3B] FIG. 3B is a diagram for depicting a specific example of map data.
[FIG. 4A] FIG. 4A is a diagram for explaining a flow of electricity in a vehicle.
[FIG. 4B] FIG. 4B is a diagram for explaining a flow of electricity in the vehicle.
[FIG. 5] FIG. 5 is a diagram for explaining a relationship between a distance from a charging point and a return power amount.
[FIG. 6] FIG. 6 is a flowchart for depicting processing of charging necessity determination in a management controller.
[FIG. 7A] FIG. 7A is a diagram for explaining a relationship between a predicted value of a battery remaining amount and a return power amount.
[FIG. 7B] FIG. 7B is a diagram for explaining a relationship between the predicted value of the battery remaining amount and the return power amount.
[FIG. 8] FIG. 8 is a flowchart for depicting processing at the time of vehicle allocation to a charging point in the vehicle.
[FIG. 9] FIG. 9 is a flowchart for depicting processing of a loading amount upper limit instruction in the management controller.
[FIG. 10] FIG. 10 is a flowchart for depicting processing at the time of limiting the loading amount in a loading machine.
[FIG. 11] FIG. 11 is a diagram for explaining a configuration of a conveyance path in a second embodiment.
[FIG. 12] FIG. 12 is a flowchart for depicting processing of vehicle allocation management of a management controller in the second embodiment.
[FIG. 13A] FIG. 13A is a diagram for explaining a relationship between a predicted value of a battery remaining amount and a return power amount in the second embodiment.
[FIG. 13B] FIG. 13B is a diagram for explaining a relationship between the predicted value of the battery remaining amount and the return power amount in the second embodiment.
[FIG. 14] FIG. 14 is a diagram for explaining a configuration of a conveyance path in a third embodiment.
[FIG. 15] FIG. 15 is a flowchart for depicting processing of vehicle allocation management of a management controller in the third embodiment.
[FIG. 16] FIG. 16 is a block diagram for depicting a configuration of a vehicle management system in a fourth embodiment.
[FIG. 17] FIG. 17 is a diagram for depicting a specific example of map data in the fourth embodiment.
[FIG. 18] FIG. 18 is a flowchart for depicting processing of updating external disturbance information in a management controller.
[FIG. 19] FIG. 19 is a flowchart for depicting processing of vehicle allocation management in the management controller in the fourth embodiment.

### Modes for Carrying Out the Invention

Hereinafter, embodiments of the present invention will be described by using the drawings. It should be noted that in each of the drawings, equivalent elements are denoted by the same reference numerals, and duplicated descriptions thereof will be omitted.

### First Embodiment

A first embodiment of the present invention will be described.

### <Outline of vehicle management system>

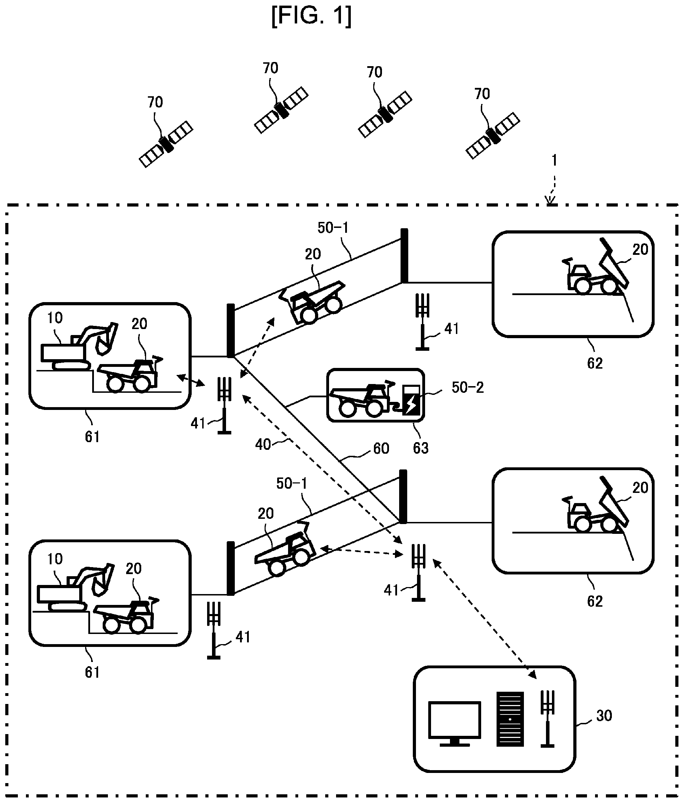

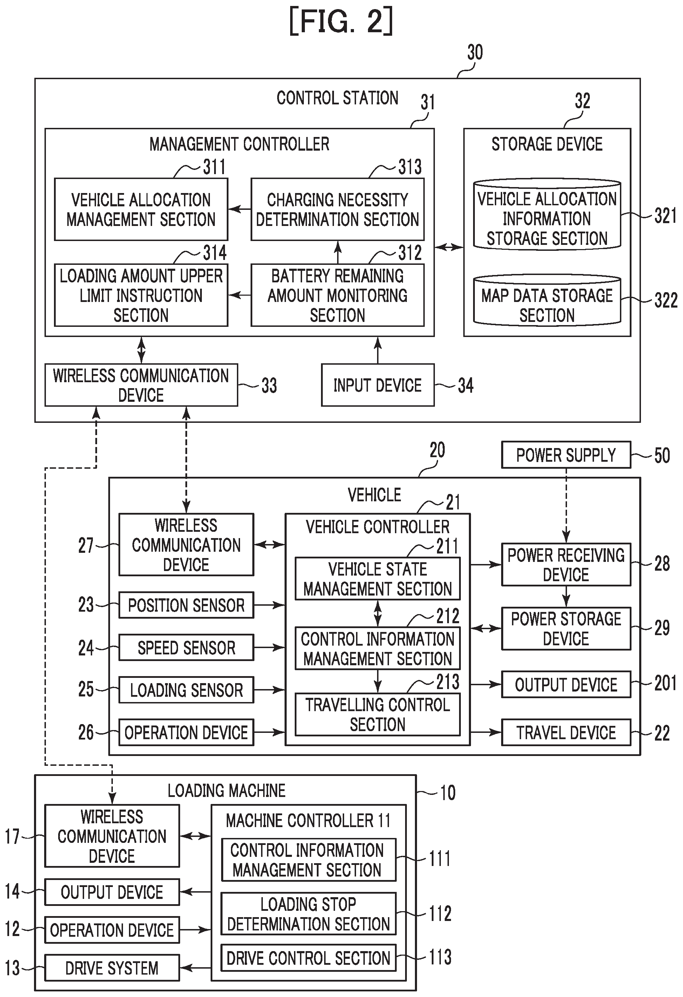

FIG. 1 is a schematic diagram for depicting a configuration of a vehicle management system in the present embodiment. FIG. 2 is a block diagram for depicting a configuration of the vehicle management system in the present embodiment. It should be noted that in FIG. 2, only one vehicle and one loading machine are depicted for convenience, but two or more vehicles and two or more loading machines may be present.

A vehicle management system 1 of the present embodiment is operated at a work site such as a mine. The vehicle management system 1 includes one or more loading machines 10 for performing excavating and loading work, one or more vehicles 20 for travelling on a conveyance path 60 at the work site and conveying earth and sand and the like loaded from the loading machine 10, and a control station 30 for controlling the vehicle 20. The loading machine 10 performs loading work of excavated earth and sand and the like into the vehicle 20 at a loading site 61, and the vehicle 20 performs dumping work of the loaded earth and sand and the like loaded at a dumping site 62.

The loading machine 10, the vehicle 20, and the control station 30 are configured to be communicable with each other by a wireless communication line 40. Specifically, a plurality of wireless base stations 41 are installed at the work site, and the loading machine 10, the vehicle 20, and the control station 30 communicate with each other via the wireless base stations 41.

The vehicle 20 is mounted with a power storage device 29 capable of holding electrical energy by a storage battery or the like. A trolley overhead 50-1 which is connected to a substation and to which power can be transmitted from a power generation plant is installed in the conveyance path 60, and the vehicle 20 can be connected to the trolley overhead 50-1 by using a pantograph or the like to charge the power storage device 29. A charging station 50-2 is installed in a parking site 63 connected to the conveyance path 60, and the vehicle 20 can be connected to the charging station 50-2 by using a power supply connector or the like to charge the power storage device 29. Hereinafter, the trolley overhead 50-1 and the charging station 50-2 will be collectively referred to as a power supply 50, and the pantograph, the power supply connector, and the like will be collectively referred to as a power receiving device 28. In addition, a point where such a power supply 50 is installed will be referred to as a charging point.

### <Configuration of vehicle>

The vehicle 20 is a dump truck that can travel by an operation performed by an operator. The vehicle 20 is provided with a vehicle controller 21, a travel device 22, a position sensor 23, a speed sensor 24, a loading sensor 25, an operation device 26, a wireless communication device 27, a power receiving device 28, a power storage device 29, and an output device 201.

The travel device 22 of the vehicle 20 is driven according to an operation of the operation device 26 to allow the vehicle 20 to travel. The travel device 22 includes, for example, a steering motor for changing the steering angle of the vehicle 20, an electrically driven travel motor for allowing the vehicle 20 to travel, a brake, and the like.

The position sensor 23 of the vehicle 20 measures the position of the vehicle 20 (own vehicle) and outputs the measured position to the vehicle controller 21. It should be noted that the position sensor 23 is, for example, a GPS (Global Positioning System) that specifies the position by using a signal from a satellite 70, a combination of a GPS and an IMU (Inertial Measurement Unit), or a device that specifies the position by using radio waves from a ground base station.

The speed sensor 24 of the vehicle 20 measures the speed of the vehicle 20 (own vehicle) and outputs the measured speed to the vehicle controller 21. It should be noted that the speed sensor 24 is, for example, a rotary encoder that detects the rotational speed of a wheel, a GPS that measures the speed from the amount of change in the position of the vehicle 20, an inertial measurement unit, or a speed estimation device that uses a combination thereof.

The loading sensor 25 of the vehicle 20 measures the weight of a loaded object such as ores or earth and sand loaded onto the vessel of the vehicle 20 (own vehicle) and outputs the measured loading amount to the vehicle controller 21. It should be noted that the loading sensor 25 is, for example, a pressure sensor that is installed under the vessel of the vehicle 20 and measures the weight of the vehicle, or a weight estimation device that uses the pressure of a hydraulic suspension for supporting wheels.

The operation device 26 of the vehicle 20 accepts an operation performed by the operator operating the vehicle 20 and outputs a signal for driving the travel device 22 and the power receiving device 28. The operation device 26 is, for example, a steering wheel, an accelerator, a brake, a button, a touch panel, or the like provided around a driver's seat.

The wireless communication device 27 of the vehicle 20 is a wireless apparatus for connecting the vehicle controller 21 and the wireless communication line 40 to each other. The vehicle controller 21 of the vehicle 20 transmits and receives information and commands to/from a management controller 31 of the control station 30 via the wireless communication device 27 or the like.

The power receiving device 28 of the vehicle 20 is driven according to an operation of the operation device 26, and is connected to the power supply 50 to supply power to the power storage device 29. The power receiving device 28 is provided with, for example, a pantograph or the like that can be elevated and lowered.

The power storage device 29 of the vehicle 20 is a device for holding electrical energy for driving the travel device 22. The power storage device 29 is provided with, for example, a plurality of lithium-ion batteries and equipment for controlling the voltage and current thereof.

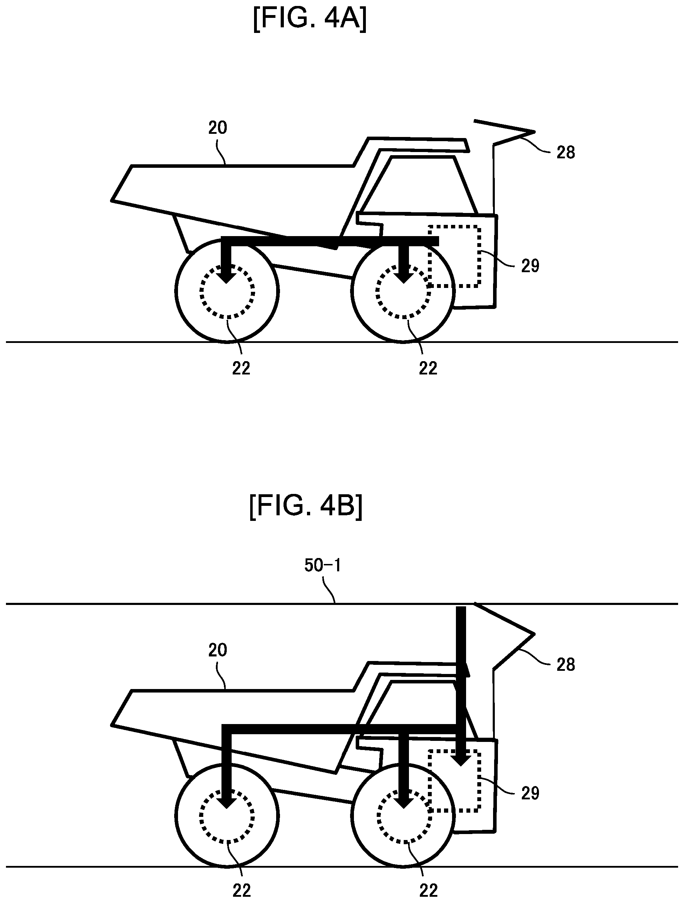

Here, the power storage device 29 performs discharging to drive the travel device 22 when the vehicle 20 travels in a state where the power receiving device 28 is not connected to the power supply 50 as depicted in, for example, FIG. 4A. In addition, when the vehicle 20 travels in a state where the power receiving device 28 is connected to the power supply 50 as depicted in, for example, FIG. 4B, charging is performed by the power supplied from the power supply 50. At this time, the travel device 22 is driven by the power supplied from the power supply 50. In addition, when the vehicle 20 decelerates regardless of whether or not being connected to the power supply 50, the power generated by a regenerative brake of the travel device 22 can be supplied to the power storage device 29 to perform charging. It should be noted that when the power storage device 29 performs charging, it is possible to perform charging in consideration of the life of a storage battery by utilizing a quick charging method or the like established in the field of electric vehicles to control the magnitude of the current so as not to place a burden on the storage battery.

The output device 201 of the vehicle 20 is a device for presenting a vehicle state and control information to the operator of the vehicle 20 by a screen display or voice. The output device 201 is, for example, a liquid crystal monitor or a speaker installed near the driver's seat of the vehicle 20.

The vehicle controller 21 of the vehicle 20 is configured using, for example, a microcomputer obtained by combining a CPU (Central Processing Unit) for executing computation, a ROM (Read Only Memory) as a secondary storage device in which a program for computation is recorded, and a RAM (Random Access Memory) as a temporary storage device for storing the progress of computation and temporary control variables. The vehicle controller 21 has, as functional configurations, a vehicle state management section 211, a control information management section 212, and a travelling control section 213.

The vehicle state management section 211 of the vehicle controller 21 manages information on the position acquired by the position sensor 23, information on the speed acquired by the speed sensor 24, information on the loading amount acquired by the loading sensor 25, information on the connection state of the power receiving device 28 to the power supply 50, and information on the battery remaining amount of the power storage device 29, and transmits these pieces of information to the management controller 31 of the control station 30.

The control information management section 212 of the vehicle controller 21 receives destination information and speed limit information from a vehicle allocation management section 311 of the management controller 31, outputs an alarm to the output device 201, and issues a speed limit instruction to the travelling control section 213.

The travelling control section 213 of the vehicle controller 21 accepts an operation accepted from the operation device 26, and drives the travel device 22 in consideration of the speed limit instruction on the basis of the information from the vehicle state management section 211 and the control information management section 212.

### <Configuration of loading machine>

The loading machine 10 is an excavator that can perform excavating and loading work by an operation performed by the operator. The loading machine 10 is provided with a machine controller 11, an operation device 12, a drive system 13, an output device 14, and a wireless communication device 17.

The drive system 13 of the loading machine 10 is driven according to an operation of the operation device 12. The drive system 13 includes, for example, a hydraulic cylinder for controlling the postures of a boom, an arm, and a bucket used by the loading machine 10 to perform loading work, a travel motor for moving the position of the loading machine 10, and the like.

The operation device 12 of the loading machine 10 accepts an operation performed by the operator operating the loading machine 10, and outputs a signal for driving the drive system 13. The operation device 12 is, for example, an operation lever, a pedal, a button, a touch panel, or the like provided around the driver's seat.

The wireless communication device 17 of the loading machine 10 is a wireless apparatus for connecting the machine controller 11 and the wireless communication line 40 to each other. The machine controller 11 of the loading machine 10 transmits and receives information and commands to/from the management controller 31 of the control station 30 via the wireless communication device 17 or the like.

The output device 14 of the loading machine 10 is a device for presenting control information to the operator of the loading machine 10 by a screen display or voice. The output device 14 is, for example, a liquid crystal monitor or a speaker installed near the driver's seat of the loading machine 10.

The machine controller 11 of the loading machine 10 is configured using, for example, a microcomputer obtained by combining a CPU (Central Processing Unit) for executing computation, a ROM (Read Only Memory) as a secondary storage device in which a program for computation is recorded, and a RAM (Random Access Memory) as a temporary storage device for storing the progress of computation and temporary control variables. The machine controller 11 has, as functional configurations, a control information management section 111, a loading stop determination section 112, and a drive control section 113.

The control information management section 111 of the machine controller 11 receives information such as the loading amount of the vehicle 20 currently being loaded and a loading amount upper limit value from the vehicle allocation management section 311 of the management controller 31, and displays the information on the output device 14.

The loading stop determination section 112 of the machine controller 11 refers to the information received by the control information management section 111, determines whether the loading of the vehicle 20 currently being loaded should be stopped in consideration of the loading amount upper limit value, and outputs an alarm to the output device 14 if necessary.

The drive control section 113 of the machine controller 11 controls the drive of the drive system 13 according to an input to the operation device 12 by the operator of the loading machine 10.

### <Configuration of control station>

The control station 30 is provided with a management controller 31, a storage device 32, a wireless communication device 33, and an input device 34.

The storage device 32 of the control station 30 is a nonvolatile storage medium capable of reading and writing information, and stores an OS, various control programs, application programs, databases, and the like. The storage device 32 has a vehicle allocation information storage section 321 and a map data storage section 322.

The wireless communication device 33 of the control station 30 is a wireless apparatus for connecting the management controller 31 and the wireless communication line 40 to each other. The management controller 31 of the control station 30 transmits and receives information and commands to/from the vehicle controller 21 of the vehicle 20 via the wireless communication device 33 or the like.

The input device 34 of the control station 30 is a user interface for the operator to operate the management controller 31. The input device 34 is, for example, a mouse, a keyboard, or the like.

The management controller 31 of the control station 30 is configured using, for example, a microcomputer obtained by combining a CPU for executing computation, a ROM as a secondary storage device in which a program for computation is recorded, and a RAM as a temporary storage device for storing the progress of computation and temporary control variables. The management controller 31 has, as functional configurations, a vehicle allocation management section 311, a battery remaining amount monitoring section 312, a charging necessity determination section 313, and a loading amount upper limit instruction section 314.

The vehicle allocation management section 311 of the management controller 31 sets a travelling route of the vehicle 20 to the destination on the basis of the position information on the vehicle 20 received from the vehicle controller 21 of the vehicle 20. For example, where the vehicle 20 is at the loading site 61, the travelling route of the vehicle 20 to the dumping site 62 is set. In addition, for example, where the vehicle 20 is at the dumping site 62, the travelling route of the vehicle 20 to the loading site 61 is set. The vehicle allocation management section 311 causes the vehicle allocation information storage section 321 of the storage device 32 to store the set travelling route of the vehicle 20 as vehicle allocation information.

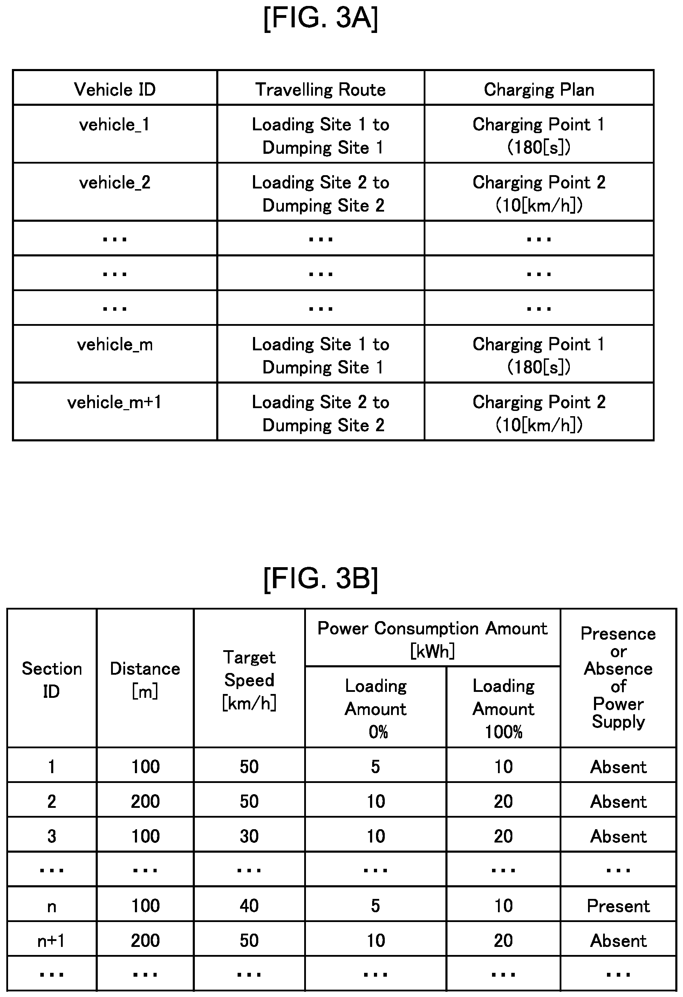

The vehicle allocation information is in a table format as depicted in, for example, FIG. 3A, and includes a vehicle ID that is the identification information of the vehicle 20, a travelling route set for each vehicle ID, and a charging plan set for the travelling route. The travelling route is, for example, a travelling route from the loading site 61 to the dumping site 62 or a travelling route from the dumping site 62 to the loading site 61. The travelling route conforms to a conveyance path of map data and is configured using sections into which the conveyance path is divided. In addition, the charging plan is, for example, a charging station existing on or near the travelling route and a charging time at the charging station. Alternatively, the charging plan is a trolley overhead existing in a section on the travelling route and a target speed for securing a charging time under the trolley overhead. The charging time can be calculated by, for example, calculating the power consumption amount of the entire travelling route while referring to map data to be described later and considering the charging speed to the power storage device 29. Alternatively, such calculation may be executed in advance and a charging plan corresponding to each route may be provided. In addition, where it is possible to refer to vehicle allocation information before and after the time, a charging plan for securing a sufficient charging amount may be calculated by considering them.

The map data is stored in the map data storage section 322 of the storage device 32, is in a table format as depicted in, for example, FIG. 3B, and includes the ID of each section in the conveyance path divided into a plurality of sections, the distance of each section, a target speed, a power consumption amount, and the presence or absence of the power supply 50. Here, the target speed of each section is a basic target speed, and where a speed in a specific section is specified in the charging plan of the vehicle allocation information, the vehicle 20 gives priority to conforming to the speed of the vehicle allocation information. In addition, the power consumption amount includes a power consumption amount according to the loading amount of the vehicle 20, and includes, for example, power consumption amounts in the cases of loading amounts of 0% and 100%. In addition, information on a sequence of coordinate points configuring each section that is not depicted may be included.

The battery remaining amount monitoring section 312 of the management controller 31 monitors and predicts information on the battery remaining amount of the power storage device 29 received from the vehicle controller 21 of the vehicle 20, and provides the information to the charging necessity determination section 313 and the loading amount upper limit instruction section 314.

The charging necessity determination section 313 of the management controller 31 compares the predicted value of the battery remaining amount of the power storage device 29 of the vehicle 20 with a return power amount that is the minimum power amount for returning from each point on the conveyance path to the charging point where the power supply 50 is installed, and requests the vehicle allocation management section 311 to change the destination to the charging point when it is predicted that the battery remaining amount falls below the return power amount when the vehicle 20 continues to travel.

When the loading machine 10 performs loading work for the vehicle 20, the loading amount upper limit instruction section 314 of the management controller 31 calculates such an upper limit value of the loading amount that the return power amount falls below the battery remaining amount on the basis of the battery remaining amount of the power storage device 29 of the vehicle 20 and the return power amount according to the loading amount of the vehicle 20 at the loading point, and issues an instruction to the machine controller 11 of the loading machine 10.

### <Description of return power amount>

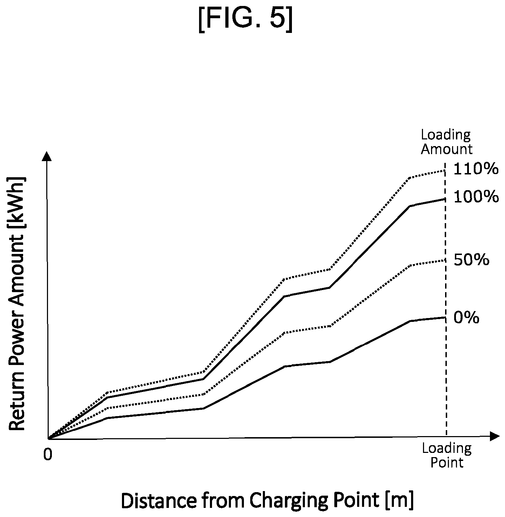

Next, an example of the return power amount that is the power amount for travelling from each point on the conveyance path to the charging point where the power supply 50 is installed will be described by using FIG. 5. FIG. 5 is a graph in which the horizontal axis represents a distance from the charging point and the vertical axis represents a return power amount, and depicts a relationship according to the loading amount of the vehicle 20. First, since the power consumption amount required for travelling increases as the travelling distance is longer regardless of the loading amount, there is a relationship that the return power amount increases. At this time, the magnitude of a gradient also affects the magnitude of the return power amount. That is, in a section where there is an upward gradient toward the charging point, the power consumption amount corresponding to the potential energy increases.

Further, there is a relationship that as the loading amount is larger, the return power amount becomes larger. That is, the return power amount becomes small when the vehicle 20 is empty (a loading amount of 0%) and the return power amount becomes large when the vehicle 20 is fully loaded (a loading amount of 100%). The return power amount in the case of the loading amount therebetween or in the case of overload larger than the full load can be calculated by linear interpolation using, for example, values of loading amounts of 0% and 100%.

The return power amount can be calculated as the power consumption amount with respect to the distance from the charging point by using the map data depicted in, for example, FIG. 3B. The power consumption amount can be roughly estimated by calculating from physical laws on the basis of the distance, gradient, and travelling resistance of each section. Alternatively, the amount of change in the battery remaining amount of the power storage device 29 for each section when the vehicle 20 actually travels may be measured and registered in the map data.

### <Details of processing of charging necessity determination of management controller>

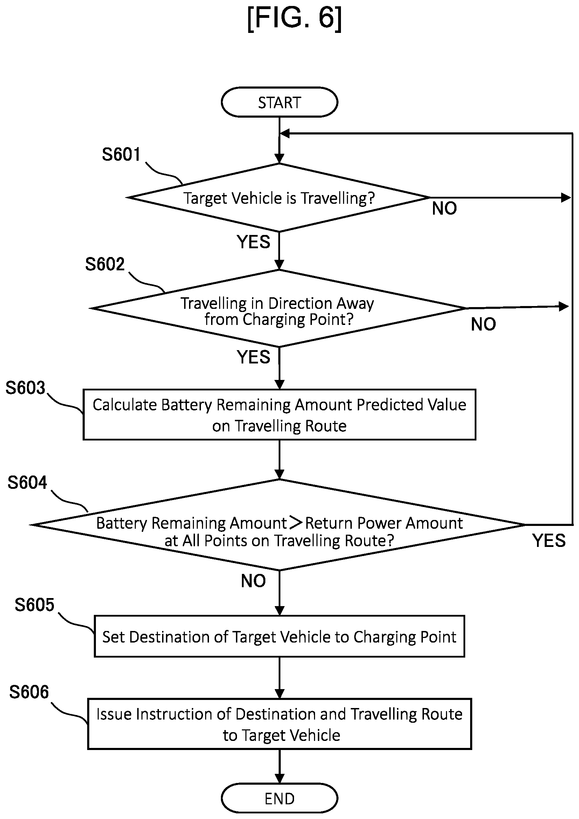

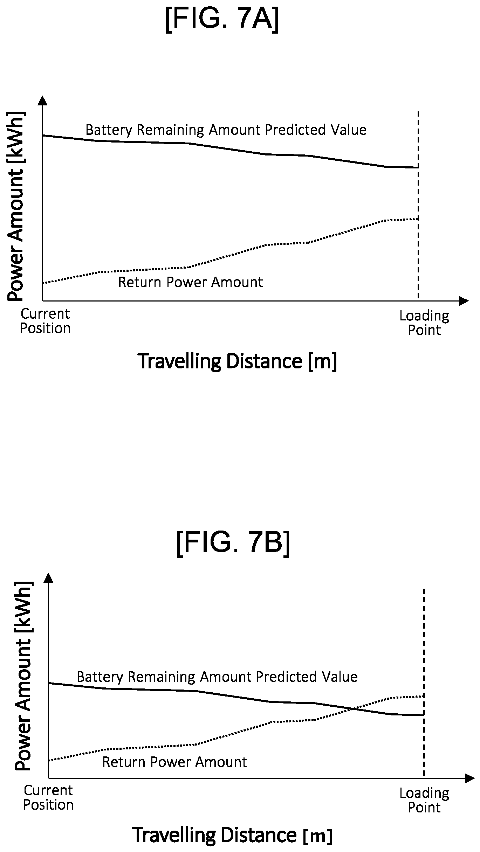

Hereinafter, an example of an operation for judging and instructing to return to the charging point in a case where it is predicted that the vehicle 20 runs out of power during travelling by utilizing information on the return power amount will be described. First, details of processing of charging necessity determination utilizing the return power amount in the management controller 31 will be described by using FIG. 6, FIG. 7A, and FIG. 7B.

First, in Step S601, the charging necessity determination section 313 of the management controller 31 determines whether the target vehicle 20 is travelling. When the target vehicle 20 is not travelling (S601/NO), the processing returns to the beginning of the processing. When the target vehicle 20 is travelling (S601/YES), the processing proceeds to Step S602.

Subsequently, in Step S602, it is determined whether the advancing direction of the target vehicle 20 is a direction away from the charging point. For example, where there is no charging point ahead of the currently travelling section of the travelling route set to the vehicle 20 by the vehicle allocation management section 311, it can be determined that the advancing direction of the vehicle 20 is a direction away from the charging point. When the direction is not a direction away from the charging point (S602/NO), the processing returns to the beginning of the processing. When the direction is a direction away from the charging point (S602/YES), the processing proceeds to Step S603.

Subsequently, in Step S603, the battery remaining amount monitoring section 312 calculates a battery remaining amount predicted value on the subsequent travelling route of the vehicle 20 on the basis of information on the current position of the vehicle 20, information on the battery remaining amount, and information on the power consumption of the map data. For example, the battery remaining amount predicted value can be calculated and held for each distance of a fixed interval on the travelling route.

Subsequently, in Step S604, the charging necessity determination section 313 determines whether the battery remaining amount predicted value exceeds the return power amount at all the points on the subsequent travelling route of the vehicle 20. In Step S604, when the condition is satisfied (S604/YES), the processing returns to the beginning of the processing. When the condition is not satisfied (S604/NO), the processing proceeds to Step S605.

The details thereof will be described by using FIG. 7A and FIG. 7B. Both FIG. 7A and FIG. 7B are graphs for representing the relationship among the travelling distance, the battery remaining amount predicted value, and the return power amount regarding the vehicle 20 that is travelling from the current position toward the loading point. Here, as described above, the values of these graphs can be calculated as a sequence of points in a distance of a fixed interval, and at this time, the battery remaining amount predicted value and the return power amount are calculated such that they can be compared with each other at the same point. FIG. 7A depicts an example in which the battery remaining amount predicted value always exceeds the return power amount at each point from the current position to the loading point. In this case, it is possible to return to the charging point from any point until the loading point is reached, and there is no risk that the vehicle 20 runs out of power even if the travelling is continued. On the other hand, FIG. 7B depicts an example in which the battery remaining amount predicted value falls below the return power amount on the way to the loading point. In this case, at a point where the battery remaining amount falls below the return power amount, there is a possibility that the vehicle 20 cannot return to the charging point and runs out of power on the way. Thus, when such a situation is predicted, it can be judged that the battery remaining amount at the present time is insufficient to continue the work.

Subsequently, in Step S605, the charging necessity determination section 313 cooperates with the vehicle allocation management section 311 to set the destination of the target vehicle 20 to the charging point. Then, in Step S606, the vehicle allocation management section 311 issues an instruction of the destination and the travelling route to the vehicle 20 through the wireless communication line 40. The vehicle 20 holds the received information in the control information management section 212 of the vehicle controller 21 and outputs the information to the output device 201 to thereby present the information to the operator of the vehicle 20.

### <Details of processing of warning and speed limit of vehicle>

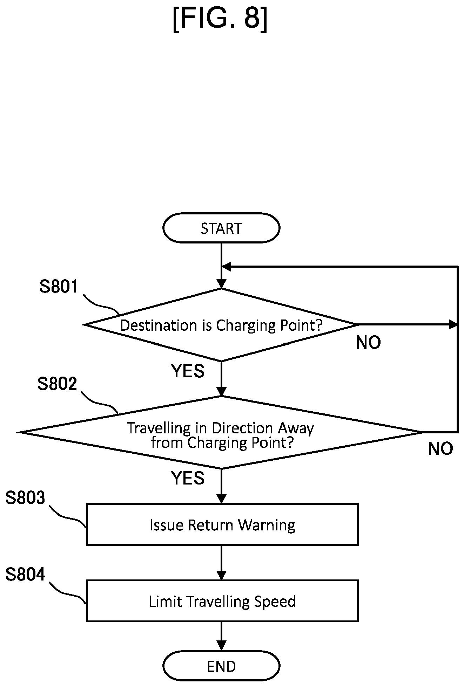

Next, details of processing of issuing a warning and limiting the speed according to the situation in a case where the destination is the charging point, in the vehicle controller 21 of the vehicle 20, will be described by using FIG. 8.

First, in Step 801, the control information management section 212 determines whether the destination set to the vehicle 20 is the charging point. Where the destination is not the charging point (S801/NO), the processing returns to the beginning of the processing. Where the destination is the charging point (S801/YES), the processing proceeds to Step 802.

Subsequently, in Step 802, the control information management section 212 refers to the information of the vehicle state management section 211 and determines whether the vehicle 20 is travelling in a direction away from the charging point set as the destination. Where the vehicle is not travelling in a direction away from the charging point (S802/NO), the processing returns to the beginning of the processing. Where the vehicle is travelling in a direction away from the charging point (S802/YES), the processing proceeds to Step 803.

Subsequently, in Step 803, the control information management section 212 issues a return warning for urging the operator to return to the charging point from the output device 201. The return warning is, for example, warning information displayed on a monitor or a warning sound emitted from a speaker.

Subsequently, in Step 804, the control information management section 212 sets a speed limit to the travelling control section 213. On the basis of the set speed limit, the travelling control section 213 limits the maximum speed to a predetermined value regardless of an operation of the operation device 26 by the operator.

### <Details of processing of loading amount upper limit instruction of management controller>

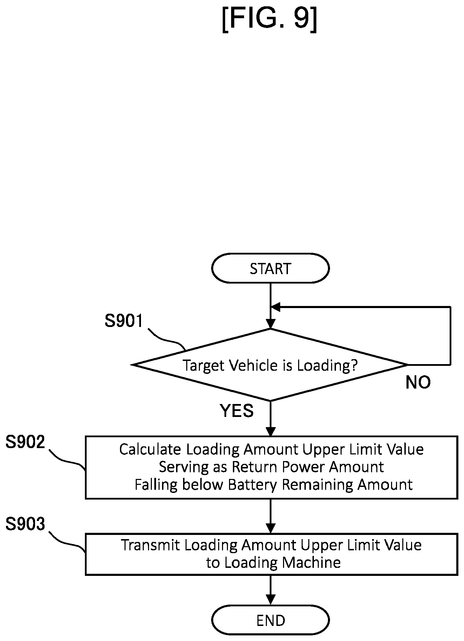

Hereinafter, an example of an operation of limiting the loading amount performed such that the vehicle 20 can return to the charging point with the battery remaining amount of the vehicle 20 when the loading machine 10 performs loading work for the vehicle 20 will be described. First, details of processing of a loading amount upper limit instruction of the management controller 31 will be described by using FIG. 9.

First, in Step S901, the loading amount upper limit instruction section 314 of the management controller 31 refers to the information received from the vehicle state management section 211 of the vehicle 20, and determines whether the target vehicle 20 is being loaded. Where it is not being loaded (S901/NO), the processing returns to the beginning of the processing. Where it is being loaded (S901/YES), the processing proceeds to Step S902.

Subsequently, in Step S902, the loading amount upper limit instruction section 314 calculates a loading amount upper limit value that is a return power amount lower than the battery remaining amount of the vehicle 20. The loading amount upper limit value can be calculated by, for example, obtaining such a loading amount that the return power amount considering the loading amount matches a value obtained by subtracting a predetermined margin from the current battery remaining amount of the vehicle 20. This calculation can be executed by referring to the value of the power consumption amount in each section in the cases of loading amounts of 0% and 100% in the map data and using linear interpolation.

Subsequently, in Step S903, the loading amount upper limit instruction section 314 issues an instruction of the calculated loading amount upper limit value to the loading machine 10 via the wireless communication line 40.

### <Details of processing of loading stop determination of loading machine>

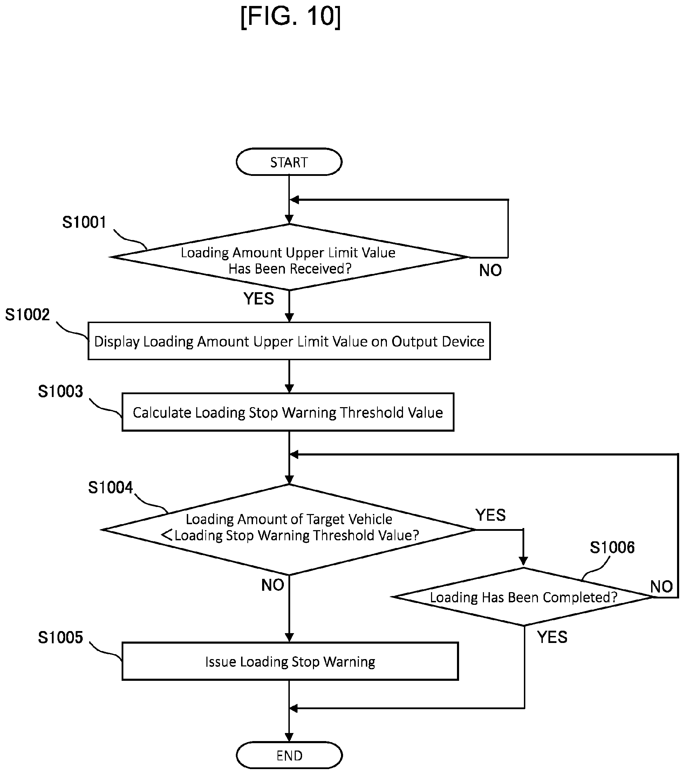

Next, details of processing of loading stop determination of the loading machine 10 will be described by using FIG. 10.

First, in Step S1001, the control information management section 111 determines whether the loading amount upper limit value has been received from the management controller 31. Where it has not been received (S1001/NO), the processing returns to the beginning of the processing. Where it has been received (S1001/YES), the processing proceeds to Step S1002.

Subsequently, in Step S1002, the control information management section 111 outputs the information on the loading amount upper limit value to the output device 14. For example, the loading amount upper limit value is displayed on a monitor by a number or a meter display and can be confirmed by the operator of the loading machine 10 together with the current loading amount of the vehicle 20.

Subsequently, in Step S1003, the loading stop determination section 112 calculates a loading stop warning threshold value. The loading stop warning threshold value is a threshold value for issuing a warning to stop the loading work when the loading amount of the vehicle 20 during the loading work exceeds the threshold value, and can be calculated as a value obtained by subtracting a predetermined margin from the loading amount upper limit value.

Subsequently, in Step S1004, the loading stop determination section 112 determines whether the loading amount of the vehicle 20 during the loading work falls below the loading stop warning threshold value. Where the loading amount is equal to or larger than the loading stop warning threshold value (S1004/NO), the processing proceeds to Step S1005.

Subsequently, in Step S1005, the loading stop determination section 112 issues a loading stop warning from the output device 14 to urge the operator of the loading machine 10 to stop the loading work. The loading stop warning is a warning display on a monitor or an alarm sound output from a speaker.

In Step S1004, where the loading amount falls below the loading stop warning threshold value (S1004/YES), the processing proceeds to Step S1006. In Step S1006, the loading stop determination section 112 determines whether the target vehicle 20 is in a loading completion state on the basis of operation information from the operation device 12. This determination can be made on the basis of, for example, whether the operator of the loading machine 10 is in a state of giving a signal of loading completion by using a button or a touch panel. Where it is in the loading completion state (S1006/YES), the processing is terminated. Where it is not in the loading completion state (S1006/NO), the processing returns to Step S1004.

### <Effect of first embodiment>

In the first embodiment, provided is a vehicle management system 1 including: a storage device 32 that stores map data; and a management controller 31 that sets a destination of a vehicle 20 on the basis of the map data. In the vehicle management system 1: before the vehicle 20 starts to travel on a travelling route from a charging point, which is a point where a power supply 50 is provided, to a predetermined destination, the management controller 31 calculates, on the basis of the map data and a loading amount of the vehicle 20, a return power amount that is a power amount required to travel from each point on the travelling route to the charging point; while the vehicle 20 is travelling on the travelling route toward the predetermined destination, the management controller 31 calculates a predicted power amount serving as the battery remaining amount of a power storage device at each point on the travelling route from the current position of the vehicle 20 to the predetermined destination; and the management controller 31 changes the destination of the vehicle 20 from the predetermined destination to another destination when there is a point where the predicted power amount falls below the return power amount among the points on the travelling route from the current position to the predetermined destination.

In addition, in the first embodiment, provided is a vehicle 20 including: a power receiving device 28 that receives power from a power supply 50; a power storage device 29 that stores the power received by the power receiving device 28; a position sensor 23 that acquires a position; a loading sensor 25 that acquires a loading amount; and a controller 21 that acquires map data and sets a destination based on the map data. In the vehicle 20: before the vehicle 20 starts to travel on a travelling route from a charging point, which is a point where the power supply 50 is provided, to a predetermined destination, the controller 21 calculates, on the basis of the map data and the loading amount, a return power amount that is a power amount required to travel from each point on the travelling route to the charging point; while the vehicle 20 is travelling along the travelling route toward the predetermined destination, the controller 21 calculates a predicted power amount serving as the battery remaining amount of the power storage device 29 at each point on the travelling route from the current position of the vehicle 20 acquired by the position sensor 23 to the predetermined destination; and the controller 21 changes the destination of the vehicle 20 from the predetermined destination to another destination when there is a point where the predicted power amount falls below the return power amount among the points on the travelling route from the current position to the predetermined destination.

According to the first embodiment configured as described above, the management controller 31 (or the vehicle controller 21) predicts a change in the battery remaining amount of the power storage device 29 while the vehicle 20 is travelling on the conveyance path 60 provided with the charging point and compares it with the return power amount at each point on the travelling route, and thus a vehicle allocation instruction is issued so as to head another destination when it is predicted that the vehicle 20 runs out of power. Accordingly, it is possible to prevent the vehicle 20 from running out of power.

In addition, another destination in the first embodiment is the charging point. Accordingly, where it is predicted that the vehicle 20 runs out of power, the power storage device 29 can be quickly charged.

In addition, the management controller 31 in the first embodiment issues a warning to urge the vehicle 20 to travel to the charging point when the vehicle 20 travels on the travelling route in a direction away from the charging point after changing the destination of the vehicle 20 from the predetermined destination to the charging point. Alternatively, the vehicle controller 21 in the first embodiment issues a warning to urge to travel to the charging point when the vehicle 20 travels on the travelling route in a direction away from the charging point after changing the destination of the vehicle 20 from the predetermined destination to the charging point. Accordingly, it is possible to prevent the vehicle 20 from running out of power.

In addition, the management controller 31 in the first embodiment instructs the vehicle 20 to limit the speed when the vehicle 20 travels on the travelling route in a direction away from the charging point after changing the destination of the vehicle 20 from the predetermined destination to the charging point. Alternatively, the vehicle controller 21 in the first embodiment limits the speed of the vehicle 20 when the vehicle 20 travels on the travelling route in a direction away from the charging point after changing the destination of the vehicle 20 from the predetermined destination to the charging point. Accordingly, it is possible to prevent the vehicle 20 from running out of power.

In addition, the management controller 31 in the first embodiment decides on a loading amount upper limit value, which is the upper limit of a loading amount where the return power amount falls below the charging amount of the power storage device 29, and issues an instruction of the loading amount upper limit value to a loading machine 10 when the loading machine 10 starts loading work for the vehicle 20. Accordingly, it is possible to prevent the vehicle 20 from running out of power on the travelling route from the loading point to the return to the charging point.

In addition, the management controller 31 in the first embodiment issues a warning to urge the loading machine 10 to stop the loading work when the loading amount of the vehicle 20 exceeds a warning threshold value set lower than the loading amount upper limit value. Accordingly, it is possible to prevent the vehicle 20 from running out of power on the travelling route from the loading point to the return to the charging point.

### <Modified example of first embodiment>

It should be noted that although an example of the configuration and operation in a case where the vehicle 20 is driven by an operator has been depicted in the present embodiment, the means for realizing the present invention is not limited to this method. For example, in a case where the vehicle 20 is provided with a function of autonomously travelling on the travelling route in accordance with the vehicle allocation instruction issued by the management controller 31, when it is predicted that the battery remaining amount falls below the return power amount and the destination is changed to the charging point, the vehicle 20 can immediately return to the charging point by autonomously travelling, instead of notifying the operator of the change of the destination and issuing a return warning. In addition, although the management controller 31 is arranged in the control station 30 in the present embodiment, the function of the management controller 31 may be implemented in the vehicle controller 21 of the vehicle 20.

### Second Embodiment

Differences of a second embodiment of the present invention from the first embodiment will be mainly described. In the present embodiment, an example of changing the destination to another dumping site on the basis of the prediction of the battery remaining amount in a case where the vehicle 20 is travelling toward a dumping site, is depicted. In particular, a plurality of dumping sites for dumping earth and sand generally exist in mines, and by changing the destination, it is possible to reduce the influence of external disturbances on productivity. It should be noted that in the present embodiment, parts equivalent to those in the first embodiment are denoted by the same reference numerals, and the description thereof will be appropriately omitted.

### <Configuration of second embodiment>

All the configurations of a vehicle management system 1 in the present embodiment are similar to those of the first embodiment. However, the processing content in the charging necessity determination section 313 of the management controller 31 is different, and the content thereof will be described later.

### <Configuration of conveyance path of second embodiment>

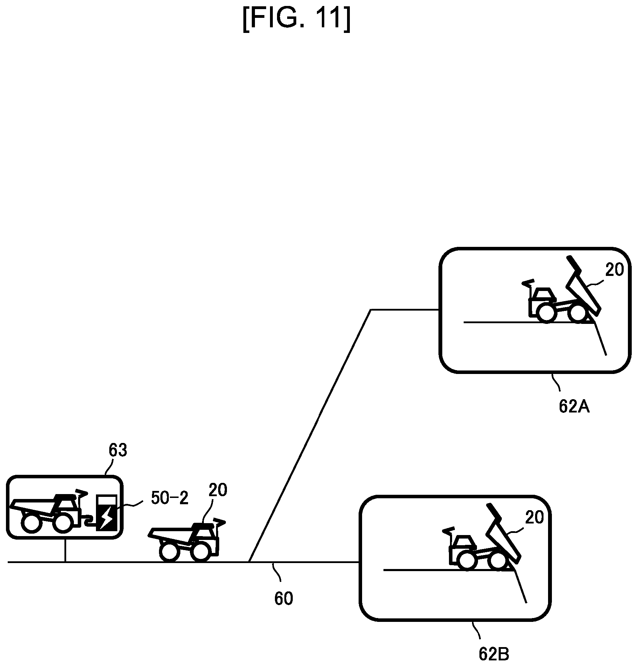

A configuration of a conveyance path assumed in the present embodiment is depicted in FIG. 11. In the present embodiment, a situation in which the vehicle 20 is travelling on the conveyance path 60 toward a dumping site 62A as the destination is assumed. It is assumed that there is a branch point connected to a dumping site 62B on the travelling route between the vehicle 20 and the dumping site 62A. In addition, it is assumed that the vehicle 20 is travelling in a direction away from the charging point. Here, in the following embodiment, the charging point is the parking site 63 where the charging station 50-2 is installed, but this may be a section of a part of the conveyance path 60 where the trolley overhead 50-1 is installed.

### <Details of processing of charging necessity determination section of management controller>

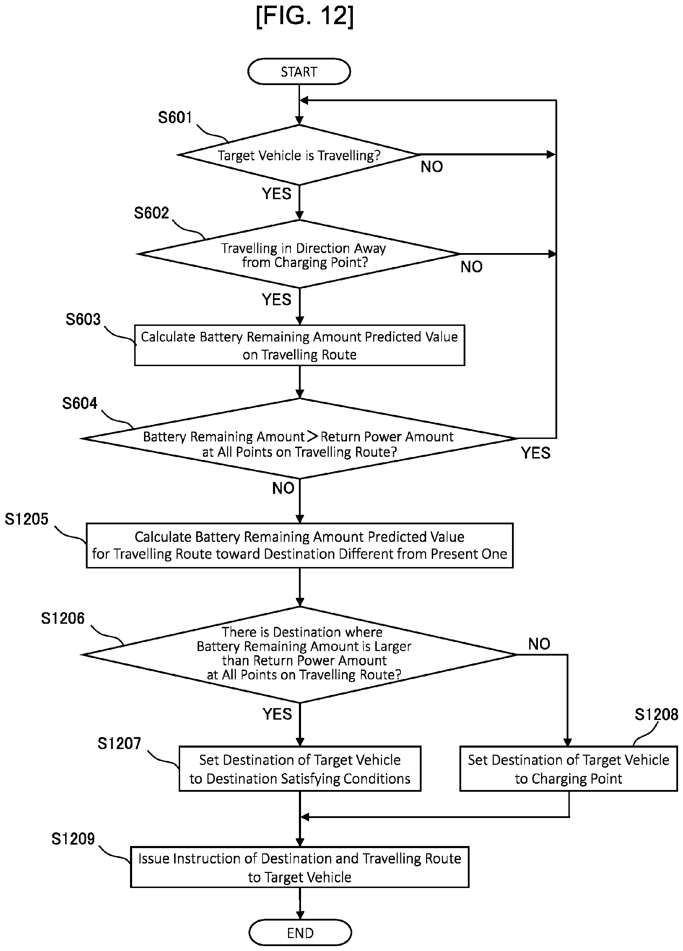

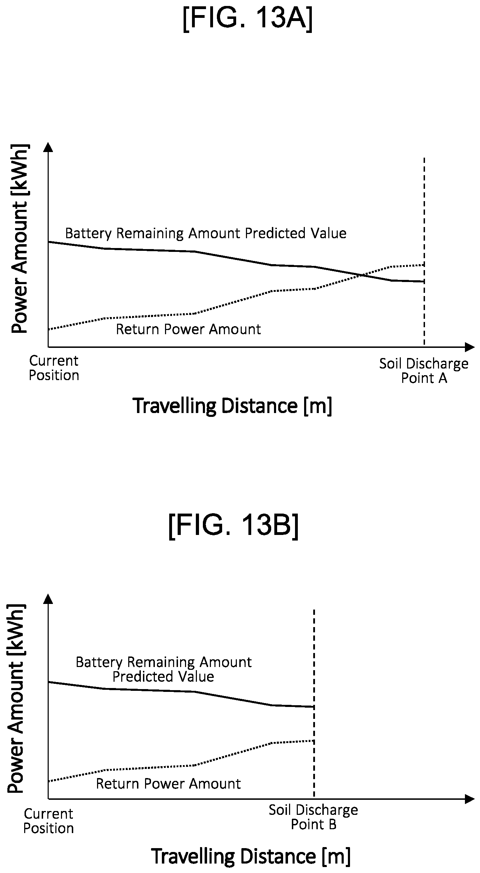

Details of processing of changing the vehicle allocation instruction for setting another destination in a case where the management controller 31 utilizes information on the return power amount and it is predicted that the vehicle 20 runs out of power while the vehicle 20 is travelling toward a certain destination, will be described by using FIG. 12, FIG. 13A, and FIG. 13B.

First, in the flowchart of FIG. 12, Steps S601 to S604 are the same as those described with reference to FIG. 6 of the first embodiment, and the description thereof will be omitted here. In the processing of the management controller 31 of FIG. 6, the destination is changed to the charging point when the condition that the battery remaining amount predicted value exceeds the return power amount at all the points on the travelling route is not satisfied in Step S604, but the subsequent processing is different in the present embodiment.

First, in Step S1205, the charging necessity determination section 313 calculates the battery remaining amount predicted value for a travelling route toward a destination different from the present one. Here, the destination different from the present one is the dumping site in the case of the loaded state and the loading site in the case of the empty state, and is, for example, the dumping site 62B in the embodiment of FIG. 11.

Here, although not illustrated in FIG. 12, when the destination is the dumping site, the destination where the load of the vehicle 20 can be discharged is the target of calculation of the battery remaining amount predicted value. For example, when the load of the vehicle 20 is surface soil, a destination where the surface soil can be dumped is the target, and when the load is an ore, a destination where the ores can be dumped is the target.

Subsequently, in Step S1206, the charging necessity determination section 313 determines whether there is a destination where the battery remaining amount predicted value exceeds the return power amount at all the points on the travelling route. When there is a destination satisfying the condition (S1206/YES), the processing proceeds to Step S1207 in which the destination of the target vehicle 20 is set to the destination satisfying the condition in cooperation with the vehicle allocation management section 311. When there is no destination satisfying the condition (S1206/NO), the processing proceeds to Step S1208 in which the destination of the target vehicle 20 is set to the charging point.

Then, in Step S1209, the vehicle allocation management section 311 issues an instruction of the destination and the travelling route to the vehicle 20 through the wireless communication line 40.

Here, a specific example in which the above processing is effective is depicted by using FIG. 13A and FIG. 13B. FIG. 13A and FIG. 13B are graphs for representing the relationship between the travelling distance, the battery remaining amount predicted value, and the return power amount with respect to the vehicle 20 that is travelling from the current position toward the dumping point, and the horizontal axes represent distances on the travelling routes toward the dumping site 62A and the dumping site 62B. FIG. 13A depicts a situation in which the change in the battery remaining amount predicted on the travelling route toward the dumping site 62A that is the current destination falls below the return power amount on the way. Thus, it is necessary to change the destination of the vehicle 20 because the condition in the determination in Step S604 is not satisfied and there is a possibility that the vehicle 20 runs out of power. On the other hand, FIG. 13B depicts a situation in which the change in the battery remaining amount predicted on the travelling route toward the dumping site 62B that is a destination different from the present one exceeds the return power amount at all the points. Thus, in such a situation, if the destination of the vehicle 20 is changed to the dumping site 62B, it is possible to prevent the vehicle 20 from running out of power.

### <Effect of second embodiment>

The management controller 31 (or the vehicle controller 21) in the second embodiment selects, as the another destination, a destination candidate corresponding to a travelling route on which there is no point where the predicted power amount of the power storage device 29 falls below the return power amount among the travelling routes from the current position of the vehicle 20 to a plurality of destination candidates serving as a candidate of the another destination when changing the destination of the vehicle 20 from the predetermined destination to the another destination.

According to the second embodiment configured as described above, the management controller 31 (or the vehicle controller 21) predicts a change in the battery remaining amount of the power storage device 29 while the vehicle 20 is travelling on the conveyance path 60 provided with the charging point, compares it with the return power amount at each point on the travelling route, and issues vehicle allocation instruction to change the destination to a destination where it is predicted that the vehicle 20 does not run out of power on the travelling route among the destination candidates different from the present one according to the loading state when it is predicted that the vehicle 20 runs out of power. Thus, it is possible to prevent the vehicle 20 from running out of power and continue the conveyance work without returning to the charging point.

In addition, the management controller 31 (or the vehicle controller 21) in the second embodiment selects a plurality of destination candidates serving as other destination candidates according to the type of load of the vehicle 20. Accordingly, it is possible to suppress a decrease in the productivity of the whole mine.

### <Modified example of second embodiment>

It should be noted that it has been described, with respect to the processing of the charging necessity determination section 313, in the present embodiment that the change of the destination is immediately judged when it is predicted that the battery remaining amount predicted value on the current travelling route falls below the return power amount at any point, but the means for realizing the present invention is not limited to this method. For example, in a case where the destination is the dumping site, the return power amount at each point becomes smaller than the loaded state by dumping the earth and sand at the dumping point by the vehicle 20, and thus even where it is predicted that the battery remaining amount predicted value on the outward passage toward the dumping site falls below the return power amount, the travelling to the destination can be continued if it is judged that the battery remaining amount predicted value exceeds the return power amount with a small loading amount on the return passage from the dumping point. In this way, the vehicle 20 does not run out of power, the original dumping plan does not need to be changed, and production can be performed as planned.

### Third Embodiment

Differences of a third embodiment of the present invention from the above-described embodiments will be mainly described. In the present embodiment, an example of an operation when a plurality of charging points exist on the conveyance path 60 on which the vehicle 20 travels is depicted.

### <Configuration of third embodiment>

All the configurations of a vehicle management system 1 in the present embodiment are similar to those of the first embodiment. However, the processing content in the charging necessity determination section 313 of the management controller 31 is different, and the content thereof will be described later.

### <Configuration of conveyance path of third embodiment>

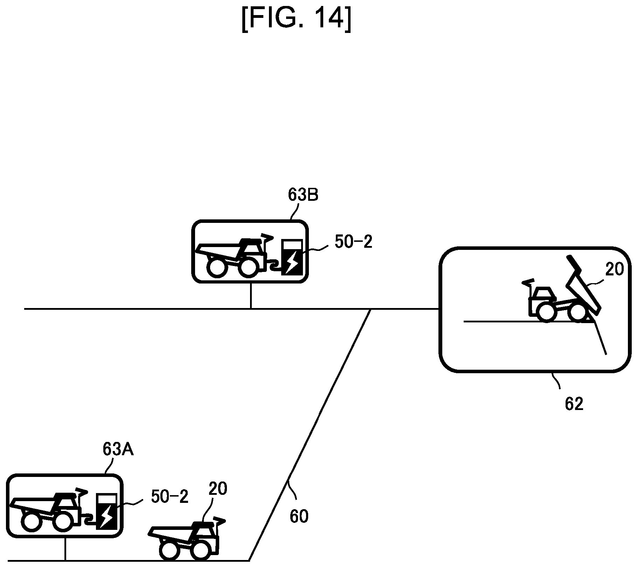

A configuration of a conveyance path assumed in the present embodiment is depicted in FIG. 14. In the present embodiment, a situation in which the vehicle 20 is travelling on the conveyance path 60 toward the dumping site 62 as the destination is assumed. It is assumed that the vehicle 20 is travelling in a direction away from a parking site 63A that is the charging point. In addition, it is assumed that there is a junction connected to a parking site 63B that is another charging point on the travelling route between the vehicle 20 and the dumping site 62.

### <Details of processing of charging necessity determination section of management controller>

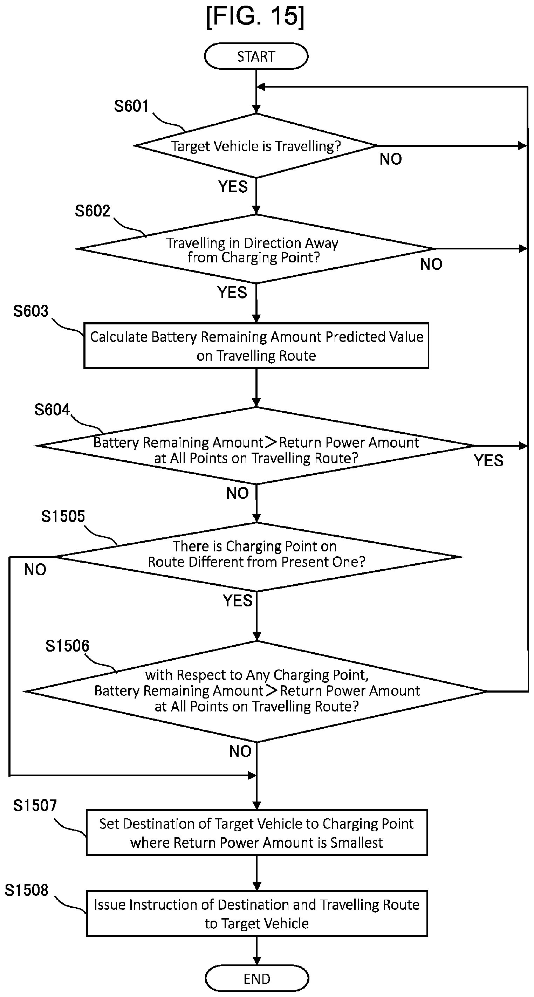

Hereinafter, details of processing in which the management controller 31 predicts the running out of power of the vehicle 20 in consideration of the return power amounts related to a plurality of charging points and issues a vehicle allocation instruction will be described by using FIG. 15.

First, in the flowchart of FIG. 15, Steps S601 to S604 are the same as those described with reference to FIG. 6 of the first embodiment, and the description thereof will be omitted here. In the processing in the management controller 31 of FIG. 6, when the condition that the battery remaining amount predicted value exceeds the return power amount at all the points on the travelling route is not satisfied in Step S604, the destination is changed to the charging point, but the subsequent processing is different in the present embodiment.

First, in Step S1505, the charging necessity determination section 313 refers to the map data and determines whether there is a charging point on a route different from the present one of the vehicle 20. Where there is a charging point (S1505/YES), the processing proceeds to Step S1506, and where there is no charging point (S1505/NO), the processing proceeds to Step S1507.

Subsequently, in Step S1506, the charging necessity determination section 313 determines whether the battery remaining amount predicted value at each point on the current travelling route of the vehicle 20 exceeds the return power amount related to any of the charging points on a different route obtained in the previous step. Here, the return power amount at the charging point on the different route is the power consumption amount required for travelling on the shortest route from each point on the travelling route of the vehicle 20 to the target charging point. For example, in the example of FIG. 14, the return power amount to the parking site 63B, which is the charging point, on the current travelling route of the vehicle 20 becomes minimum at the merging point and becomes larger as the distance increases from the merging point. Conversely, as viewed from the current position of the vehicle 20 in FIG. 14, the return power amount to the parking site 63B on the current travelling route becomes smaller as it approaches the merging point. In Step S1506, when the battery remaining amount predicted value on the travelling route always exceeds the return power amount for any of the charging points (S1506/YES), the processing returns to Step S601. When the condition is not satisfied for any of the charging points (S1506/NO), the processing proceeds to Step S1507.

Subsequently, in Step S1507, the charging necessity determination section 313 cooperates with the vehicle allocation management section 311 to set the destination of the target vehicle 20 to the charging point having the smallest return power amount from the current position. Then, in Step S1508, the vehicle allocation management section 311 issues an instruction of the destination and the travelling route to the vehicle 20 through the wireless communication line 40.

### <Effect of third embodiment>

The management controller 31 (or the vehicle controller 21) in the third embodiment selects, as the another destination, a charging point where the return power amount becomes minimum among a plurality of charging points in a case where the plurality of charging points including the charging point exist on a travelling route from the charging point to the predetermined destination or on a travelling route branched from the travelling route and a point where the predicted power amount falls below the return power amount exists on all the travelling routes up to the plurality of charging points.

According to the present embodiment configured as described above, the management controller 31 (or the vehicle controller 21) predicts a change in the battery remaining amount of the power storage device 29 while the vehicle 20 is travelling on the conveyance path 60 provided with a plurality of charging points and compares the battery remaining amount predicted value at each point on the travelling route with the return power amounts for the plurality of charging points, and changes the destination of the vehicle 20 to the charging point having the smallest return power amount when it is predicted that the vehicle 20 runs out of power, to thereby prevent the vehicle 20 from running out of power. Thus, a loss in power consumption due to returning to the charging point, that is, the cost can be reduced.

### Fourth Embodiment

Differences of a fourth embodiment of the present invention from the above-described embodiments will be mainly described. In the present embodiment, an example in which a charging plan is adjusted in advance by utilizing actual data on an increase in a power consumption amount due to external disturbances that actually occurred when the vehicle 20 travelled on the conveyance path 60 is depicted.

### <Configuration of fourth embodiment>

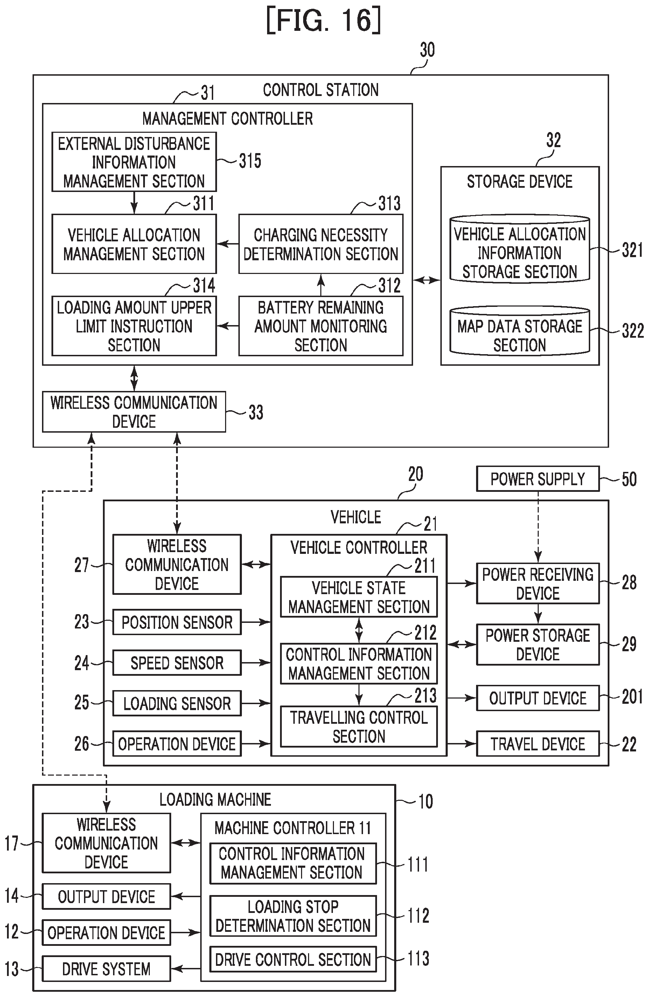

A configuration of a vehicle management system 1 in the present embodiment is depicted in FIG. 16. In the present embodiment, in addition to the configuration of the first embodiment, the management controller 31 is provided with an external disturbance information management section 315. It should be noted that all of other constitutional elements are similar to those of the first embodiment.

The external disturbance information management section acquires information on the battery remaining amount of the power storage device 29 of the vehicle 20, aggregates the amount of change in the battery remaining amount for each section of the conveyance path 60, and stores it in the map data. In addition, the external disturbance information management section issues an instruction of a charging plan for adjusting the charging amount at the charging point of the vehicle 20 in cooperation with the vehicle allocation management section.

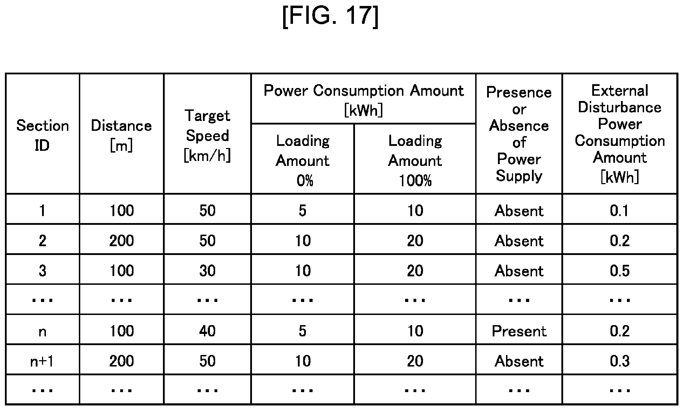

An example of the map data in the present embodiment is depicted in FIG. 17. The map data includes information on an external disturbance power consumption amount in each section, in addition to the content of the first embodiment. The external disturbance power consumption amount is information obtained by estimating, on the basis of actual data, the power consumption amount that additionally occurs due to various factors as described above such as interaction with another vehicle, unplanned work, and the influence of the road surface state, in addition to the power consumption amount required for normal travelling in each section. It should be noted that although the external disturbance power consumption amount is stored separately from the normal power consumption amount in the present embodiment, the power consumption amount of each section including the influence of the external disturbances may be collectively stored.

### <Details of processing of updating external disturbance power consumption amount of management controller>

Hereinafter, a method of acquiring the external disturbance power consumption amount from actual data and a method of vehicle allocation management including a charging plan utilizing the method will be described.

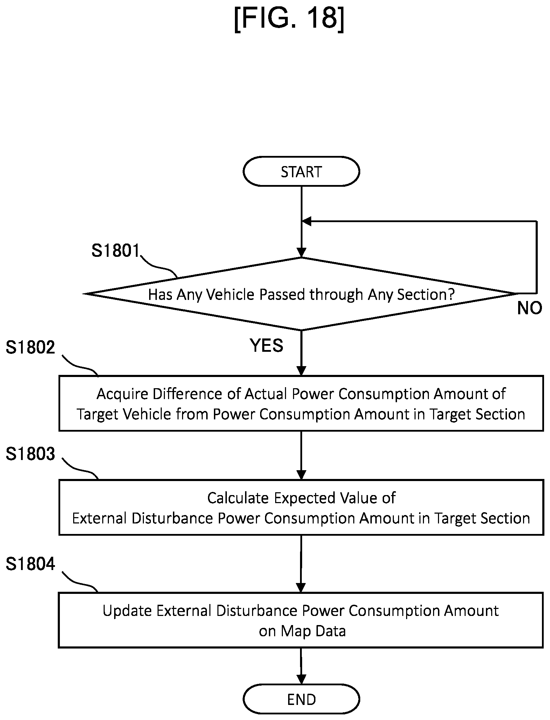

First, details of processing of updating the external disturbance power consumption amount in the management controller 31 will be described by using FIG. 18.

First, in Step S1801, the external disturbance information management section 315 determines whether any vehicle 20 has passed through any of the sections on the conveyance path 60. This determination can be made on the basis of information on the order of the travelling route included in the vehicle allocation information set for the vehicle 20 and the position information of the vehicle 20. When the vehicle 20 has not passed through any of the sections (S1801/NO), the processing returns to the beginning of the processing. When the vehicle 20 has passed through any of the sections (S1801/YES), the processing proceeds to Step S1802.

Subsequently, in Step S1802, the external disturbance information management section 315 compares the power consumption amount on the map data of the target section with the actual power consumption amount of the target vehicle 20, and obtains the difference therebetween. The actual power consumption amount of the target vehicle 20 can be calculated by, for example, obtaining a difference between the battery remaining amounts of the vehicle 20 at the start and end of the travelling in the target section.

Subsequently, in Step S1803, the external disturbance information management section 315 calculates an expected value of the external disturbance power consumption amount of the target section by using the difference of the actual power consumption amount from the power consumption amount on the map data of the target section. For example, it can be calculated by holding history information on the difference from the power consumption amount on the map data and obtaining a moving average thereof.

Then, in Step S1804, the external disturbance information management section 315 updates the external disturbance power consumption amount of the map data with the value calculated in the previous step.

### <Details of processing of vehicle allocation instruction in consideration of external disturbance power consumption amount of management controller>

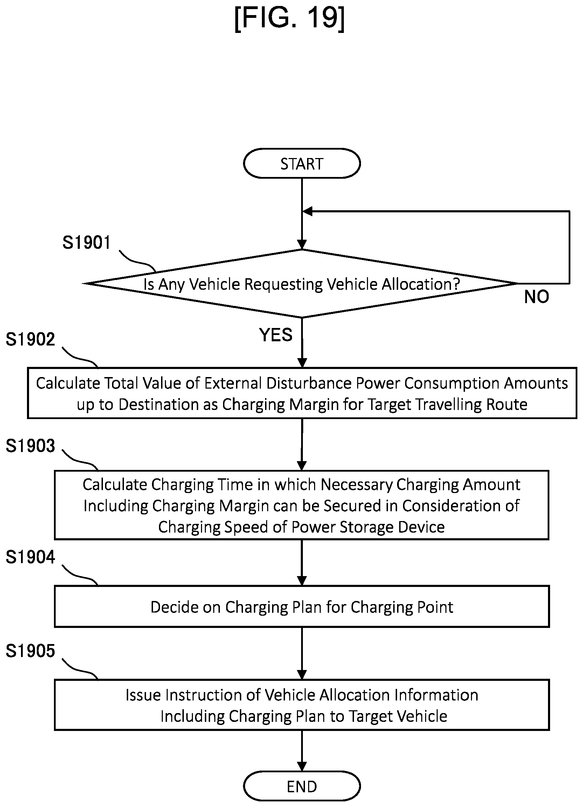

Next, details of processing of a vehicle allocation instruction in consideration of the external disturbance power consumption amount in the management controller 31 will be described by using FIG. 19.

First, in Step S1901, the vehicle allocation management section 311 determines whether any vehicle 20 is requesting vehicle allocation to the next destination. When there is no vehicle 20 requesting the vehicle allocation (S1901/NO), the processing returns to the beginning of the processing. When there is a vehicle 20 requesting the vehicle allocation (S1901/YES), the processing proceeds to Step S1902.

Subsequently, in Step S1902, the vehicle allocation management section 311 cooperates with the external disturbance information management section 315 to calculate the total value of the external disturbance power consumption amounts up to the destination as a charging margin for the target travelling route. Here, the destination and the travelling route up to the destination are decided in consideration of the loading state of the vehicle 20 and the working state of the loading machine 10.

Subsequently, in Step S1903, the vehicle allocation management section 311 calculates a charging time in which a charging amount necessary for the target travelling route including the charging margin calculated in the previous step can be secured, in consideration of the charging speed of the power storage device 29.

Subsequently, in Step S1904, the vehicle allocation management section 311 decides on a charging plan for the charging point on the target travelling route. The charging plan is information on the charging time at the charging point or the travelling speed, and can be calculated by considering the charging margin for the original charging section associated with the target travelling route.

Finally, in Step S1905, the vehicle allocation management section 311 issues an instruction of vehicle allocation information including the decided charging plan to the vehicle 20 that has requested the vehicle allocation.

### <Effect of fourth embodiment>

The management controller 31 in the fourth embodiment acquires information on an actual power consumption amount that is the power amount of the power storage device 29 actually consumed by the vehicle 20 in each section of the travelling route, estimates a power amount required for travelling on the travelling route on the basis of the information on the actual power consumption amount, decides on a charging plan such that a power amount to be charged at the charging point exceeds the power amount required for the travelling, and issues an instruction of the charging plan to the vehicle 20.

According to the fourth embodiment configured as described above, since the management controller 31 can acquire the power consumption amount due to the external disturbances that actually occurred when the vehicle 20 travelled on the conveyance path 60 and reflect it in the charging plan, it is possible to secure a charging amount in advance in consideration of the power consumption amount due to the external disturbances and reduce the possibility of returning to the charging point in the middle of the travelling, and thus it is possible to suppress a decrease in productivity caused by the external disturbances.

Although the embodiments of the present invention have been described above in detail, the present invention is not limited to the above-described embodiments, but includes various modified examples. For example, the above-described embodiments have been described in detail in order to clearly explain the present invention, and the present invention is not necessarily limited to those having all the described configurations. In addition, it is possible to add some configurations of one embodiment to the configurations of another embodiment, or to delete some configurations of one embodiment or to replace with some configurations of another embodiment.

### Description of Reference Characters

- 1:: vehicle management system
- 10:: loading machine
- 11:: machine controller
- 12:: operation device
- 13:: drive system
- 14:: output device
- 17:: wireless communication device
- 20:: vehicle
- 21:: vehicle controller
- 22:: travel device
- 23:: position sensor
- 24:: speed sensor
- 25:: loading sensor
- 26:: operation device
- 27:: wireless communication device
- 28:: power receiving device
- 29:: power storage device
- 30:: control station
- 31:: management controller
- 32:: storage device
- 33:: wireless communication device
- 34:: input device
- 40:: wireless communication line
- 41:: wireless base station
- 50:: power supply
- 50-1:: trolley overhead
- 50-2:: charging station
- 60:: conveyance path
- 61:: loading site
- 62, 62A, 62B:: dumping site
- 63, 63A, 63B:: parking site
- 70:: satellite
- 100:: loading amount
- 111:: control information management section
- 112:: loading stop determination section
- 113:: drive control section
- 201:: output device
- 211:: vehicle state management section
- 212:: control information management section
- 213:: travelling control section
- 311:: vehicle allocation management section
- 312:: battery remaining amount monitoring section
- 313:: charging necessity determination section
- 314:: loading amount upper limit instruction section
- 315:: external disturbance information management section
- 321:: vehicle allocation information storage section
- 322:: map data storage section

## Claims

1. A vehicle comprising:
a power receiving device that receives power from a power supply;
a power storage device that stores the power received by the power receiving device;
a position sensor that acquires a position;
a loading sensor that acquires a loading amount; and
a controller that acquires map data and sets a destination based on the map data, wherein
the controller is configured to
calculate a return power amount based on the map data and the loading amount before the vehicle starts to travel on a travelling route to a predetermined destination from a charging point that is a point provided with the power supply, the return power amount being a power amount required to travel from each point on the travelling route to the charging point,
calculate a predicted power amount while the vehicle is travelling along the travelling route toward the predetermined destination, the predicted power amount serving as a battery remaining amount of the power storage device at each point on the travelling route from a current position of the vehicle acquired by the position sensor to the predetermined destination, and
change the destination of the vehicle from the predetermined destination to another destination when there is a point where the predicted power amount falls below the return power amount among points on the travelling route from the current position to the predetermined destination.

2. The vehicle according to claim 1, wherein
the another destination is the charging point.

3. The vehicle according to claim 2, wherein
the controller issues a warning to urge to travel to the charging point when the vehicle travels on the travelling route in a direction away from the charging point after changing the destination of the vehicle from the predetermined destination to the charging point.

4. The vehicle according to claim 2, wherein
the controller limits a speed of the vehicle when the vehicle travels on the travelling route in a direction away from the charging point after changing the destination of the vehicle from the predetermined destination to the charging point.

5. The vehicle according to claim 1, wherein
the controller selects, as the another destination, a destination candidate corresponding to a travelling route on which there is no point where the predicted power amount falls below the return power amount among travelling routes from the current position to a plurality of destination candidates serving as a candidate of the another destination, when changing the destination of the vehicle from the predetermined destination to the another destination.

6. The vehicle according to claim 5, wherein
the controller selects the plurality of destination candidates according to a type of load of the vehicle.

7. The vehicle according to claim 2, wherein
the controller selects, as the another destination, a charging point where the return power amount becomes minimum among a plurality of charging points including the charging point, when the plurality of charging points exist on the travelling route or on a travelling route branched from the travelling route and a point where the predicted power amount falls below the return power amount exists on all travelling routes up to the plurality of charging points.

8. A vehicle management system comprising:
a storage device that stores map data; and
a management controller that sets a destination of a vehicle based on the map data, wherein
the management controller is configured to
calculate a return power amount based on the map data and a loading amount of the vehicle before the vehicle starts to travel on a travelling route to a predetermined destination from a charging point that is a point provided with a power supply, the return power amount being a power amount required to travel from each point on the travelling route to the charging point,
calculate a predicted power amount while the vehicle is travelling along the travelling route toward the predetermined destination, the predicted power amount serving as a battery remaining amount of a power storage device of the vehicle at each point on the travelling route from a current position of the vehicle to the predetermined destination, and
change the destination of the vehicle from the predetermined destination to another destination when there is a point where the predicted power amount falls below the return power amount among points on the travelling route from the current position to the predetermined destination.

9. The vehicle management system according to claim 8, wherein
the another destination is the charging point.

10. The vehicle management system according to claim 9, wherein
the management controller issues a warning to urge the vehicle to travel to the charging point when the vehicle travels on the travelling route in a direction away from the charging point after changing the destination of the vehicle from the predetermined destination to the charging point.

11. The vehicle management system according to claim 9, wherein
the management controller instructs the vehicle to limit a speed when the vehicle travels on the travelling route in a direction away from the charging point after changing the destination of the vehicle from the predetermined destination to the charging point.

12. The vehicle management system according to claim 8, wherein
the management controller selects, as the another destination, a destination candidate corresponding to a travelling route on which there is no point where the predicted power amount falls below the return power amount among travelling routes from the current position to a plurality of destination candidates serving as a candidate of the another destination, when changing the destination of the vehicle from the predetermined destination to the another destination.

13. The vehicle management system according to claim 12, wherein
the management controller selects the plurality of destination candidates according to a type of load of the vehicle.

14. The vehicle management system according to claim 9, wherein
the management controller selects, as the another destination, a charging point where the return power amount becomes minimum among a plurality of charging points including the charging point, when the plurality of charging points exist on the travelling route or on a travelling route branched from the travelling route and a point where the predicted power amount falls below the return power amount exists on all travelling routes up to the plurality of charging points.

15. The vehicle management system according to claim 8, wherein
the management controller decides on a loading amount upper limit value and issues an instruction of the loading amount upper limit value to a loading machine when the loading machine starts loading work for the vehicle, the loading amount upper limit value being an upper limit of a loading amount where the return power amount falls below a charging amount of the power storage device.

16. The vehicle management system according to claim 15, wherein
the management controller issues a warning to urge the loading machine to stop the loading work, when the loading amount of the vehicle exceeds a warning threshold value set lower than the loading amount upper limit value.

17. The vehicle management system according to claim 8, wherein
the management controller is configured to
acquire information on an actual power consumption amount that is a power amount of the power storage device actually consumed by the vehicle in each section of the travelling route,
estimate a power amount required for travelling on the travelling route on a basis of the information on the actual power consumption amount,
decide on a charging plan such that a power amount to be charged at the charging point exceeds the power amount required for travelling and issue an instruction of the charging plan to the vehicle.
